# EUROPEAN PATENT SPECIFICATION

(11) **EP 1 798 247 B1**
(45) Date of publication and mention of the grant of the patent: **21.09.2011**
(21) Application number: 06026209.4
(22) Date of filing: 18.12.2006
(51) Int. Cl.: C08G 18/48, C08K 3/40, C08K 7/02, C08J 5/04, B32B 5/24

(54) **Resin molded article for laying rails and method for producing the same**
Harzgeformter Artikel zum Verlegen von Gleisen und Verfahren für dessen Herstellung
Article de résine moulée pour poser des voies et son procédé de préparation

(30) Priority: 19.12.2005 JP 2005364932
(43) Date of publication of application: 20.06.2007
(73) Proprietor: SEKISUI CHEMICAL CO., LTD., Osaka-shi, Osaka 530-8565 (JP)
(72) Inventor: Ishijima, Yuuji, Ritto-shi Shiga 520-3081 (JP); Saito, Yasuhiro, Ritto-shi Shiga 520-3081 (JP); Adachi, Koichi, Ritto-shi Shiga 520-3081 (JP)
(74) Representative: Merkle, Gebhard

(56) References cited:
- DE-A1- 4 015 714
- DE-A1- 4 035 610
- US-A- 5 234 975
- DATABASE WPI Week 200059 Derwent Publications Ltd., London, GB; AN 2000-614495 XP002430287 & JP 2000 204267 A (SEKISUI CHEM IND CO LTD) 25 July 2000 (2000-07-25)
- DATABASE WPI Week 200064 Derwent Publications Ltd., London, GB; AN 2000-661155 XP002430288 & JP 2000 281745 A (BANDO CHEM IND LTD) 10 October 2000 (2000-10-10)

## Description

### BACKGROUND OF THE INVENTION

### FIELD OF THE INVENTION

The present invention relates to a resin molded article for laying rails having high vibration damping capacity, and especially to a resin molded article for laying rails available for sleepers or a packing to be laid between sleepers and a support of the sleepers.

### BACKGROUND ART

Sleepers or a packing is laid on a railway track or the like. Sleepers are laid under rails to support rail loads with keeping the distance between two rails. Further, the packing is laid between rails and sleepers with adjusting height between sleepers and rails or between rails and iron girders and dampens vibration in train running by vibrational absorption by the packing.

Such a packing uses various kinds of material such as a rubber depending on conditions for the use. The patent document 1 discloses the known art using a polyurethane resin molded article as the material.
Patent Document 1: JP 2000-281745A

US 5 234 975 refers to a composition for fiber-reinforced polyurethane resin, which comprises a long-fiber mat and a polyurethane composition, said polyurethane composition comprising: (a) an organic polyisocyanate, (b) a polyether polyol having a molecular weight of from 300 to 700, and having three or more functional groups, (c) ethylene glycol and/or 1,3 butanediol, (d) an imidazole represented by the general formula (1), as a curing catalyst, (1) where m is an integer of from 1 to 4, and n is an integer of from 1 to 4.

JP 2000 204267 relates to a composite material which can be produced by impregnating and bundling long fibers with a bundling resin, arranging the bundled long fibers in the state of being aligned in the length direction in a mold, and supplying a matrix resin into the mold to bond the bundled long fibers. The synthetic railroad tie is produced by molding the material in a mold into the form of a pillar. In particular, this reference relates to a composite material for synthetic railway sleepers which comprises a long glass fiber oriented in longitudinal direction and a binder resin which contains a curable and foamable mixture of polyisocyanate, a polyetherpolyol with a OH value of 480, water and further additives, which is applied onto rovings and laminated articles thereof.

### DISCLOSURE OF THE INVENTION

### PROBLEMS TO BE SOLVED BY THE INVENTION

In the patent document 1, it is difficult to combine vibration damping and a high strength. Further, continuous molding using a long fiber might cause deformation or cracks by post-expansion that is expansion caused by internal pressure of foam formation after rolling off a molding process in molding, resulting in difficulty in continuous molding.

An object of the present invention made in view of the problems and drawbacks described above is therefore to provide a molding for laying rails made of a polyurethane resin having an advanced vibration damping efficiency.

### SUMMARY OF THE INVENTION

A resin molded article for laying rails in an aspect of the present invention includes a polyurethane resin part obtained through reaction of a polyol and an isocyanate and a fiber part contained in the polyurethane resin part, the polyol having a hydroxyl value within a range of 80 to 350 mg KOH/g and a functionality within a range of 2.0 to 3.5, the polyol and the isocyanate being mixed at a mixing ratio within a range of 1 : 1.1 to 1 : 0.4, wherein the fiber part employs a glass long fiber oriented in a predetermined direction.

The present aspect is a resin molded article for laying rails consisting mainly of a polyurethane resin part obtained through reaction of a polyol and an isocyanate and containing therein a fiber part, the polyol having a hydroxyl value within a range of 80 to 350 mg KOH/g and a functionality within a range of 2.0 to 3.5, the polyol and the isocyanate being mixed at a mixing ratio within a range of 1 : 1.1 to 1 : 0.4, wherein the fiber part employs a glass long fiber oriented in a predetermined direction so that the polyurethane resin part is appropriately soft with a vibration damping capacity and appropriately hard with strength and durability.

The above-mentioned polyurethane resin part may have a proportional limit compressive strength within a range of 1.0 to 3.0 MPa and a static spring constant within a range of 5 to 50 kN/mm.

Herein, a static spring constant uses a test piece of 50 mm x 100 mm x 100 mm to show a value measured by "Orohoshiki" in "6. Seitekitokuseishiken (Static property test)" in JIS K 6385 (Testing methods for rubber vibration isolators).

This configuration enables compatibility between vibration damping capacity and strength and durability because the polyurethane resin part has a proportional limit compressive strength within a range of 1.0 to 3.0 MPa and a static spring constant within a range of 5 to 50 kN/mm.

Further, a resin molded article for laying rails in another aspect of the present invention includes a hard resin part and a soft resin part, wherein the hard and the soft resin parts form a laminated body arranged in laminae, and wherein the soft resin part consists essentially of a polyurethane resin molded article including (a) a polyurethane resin part obtained through reaction of a polyol and an isocyanate and (b) a fiber part contained in the polyurethane resin part, the polyol having a hydroxyl value within a range of 80 to 350 mg KOH/g and a functionality within a range of 2.0 to 3.5, and the polyol and the isocyanate being mixed at a mixing ratio within a range of 1 : 1.1 to 1 : 0.4, wherein the fiber part employs a glass long fiber oriented in a predetermined direction.

This configuration consists mainly of a hard resin part and a soft resin part, wherein the hard and the soft resin parts form a laminated body arranged in laminae, and wherein the soft resin part consists essentially of a polyurethane resin molded article including (a) a polyurethane resin part obtained through reaction of a polyol and an isocyanate and (b) a fiber part contained in the polyurethane resin part, so that the soft resin part lends vibration damping capacity and the hard resin part lends strength and durability. Further, the vibration damping capacity is improved because the polyol has a hydroxyl value within a range of 80 to 350 mg KOH/g and a functionality within a range of 2.0 to 3.5, and the polyol and the isocyanate are mixed at a mixing ratio within a range of 1 : 1.1 to 1 : 0.4, wherein the fiber part employs a glass long fiber oriented in a predetermined direction.

Further, the polyurethane resin part may have a proportional limit compressive strength within a range of 1.0 to 3.0 MPa and a static spring constant within a range of 5 to 50 kN/mm.

This configuration enables compatibility between vibration damping capacity and strength and durability because the polyurethane resin part has a proportional limit compressive strength within a range of 1.0 to 3.0 MPa and a static spring constant within a range of 5 to 50 kN/mm.

Still further, the fiber part employs a glass long fiber oriented in a predetermined direction. Herein, "a long fiber" means a fiber having a length substantially equal to or longer than the length of the resin molded article.

This configuration is especially excellent in strength because a glass long fiber is used in the fiber part and oriented in a predetermined direction.

A method for producing the resin molded article for laying rails as described above includes the steps of a step of tying up at least one continuous glass long fiber in a bundle, a step of impregnating a bundle of glass long fiber with a liquid resin made from a polyol and an isocyanate, and a step of introducing the glass long fiber impregnated with the liquid resin into a mold, so as to harden the liquid resin to be cut in a predetermined length, so that the resin molded article for laying rails are continuously produced.

This method is excellent in productivity because including a step of tying up at least one continuous glass long fiber in a bundle, a step of impregnating a bundle of glass long fiber with a liquid resin made from a polyol and an isocyanate, and a step of introducing the glass long fiber impregnated with the liquid resin into a mold, so as to harden the liquid resin to be cut in a predetermined length, so that the resin molded article for laying rails are continuously produced. Further, the polyol has a hydroxyl value within a range of 80 to 350 mg KOH/g and a functionality within a range of 2.0 to 3.5, and the polyol and the isocyanate are mixed at a mixing ratio within a range of 1 : 1.1 to 1 : 0.4, so as to generate less deformation or cracks of the resin hardened in a mold.

A method for producing the resin molded article for laying rails as described above includes the steps of a step of crushing the resin molded article containing a glass fiber so as to make crushed resin material and a step of filling the crushed resin material, the polyol, and the isocyanate into a mold, so as to harden in the mold.

This method destroys once used or unneeded products, thereby being excellent in recycling efficiency because including a step of crushing the resin molded article containing a glass fiber so as to make crushed resin material and a step of filling the crushed resin material, the polyol, and the isocyanate into a mold, so as to harden in the mold.

### ADVANTAGEOUS EFFECT OF THE INVENTION

The resin molded article for laying rails in the present invention is excellent in vibration damping capacity and employed as a sleeper or packing.

### BRIEF DESCRIPTION OF THE DRAWINGS

Fig. 1 is a perspective view of a resin molded article for laying rails in the first embodiment of the present invention;
Fig. 2 is a perspective view showing a continuous molding line of the resin molded article;
Fig. 3 is a view showing the continuous molding line shown in Fig. 2;
Fig. 4 is a perspective view of a resin molded article for laying rails in the second embodiment of the present invention;
Fig. 5 is a perspective view of a resin molded article for laying rails in the third embodiment of the present invention;
Fig. 6 is a perspective view of a resin molded article for laying rails in the fourth embodiment of the present invention;
Fig. 7 is a perspective view of a resin molded article for laying rails in the fifth embodiment of the present invention;
Fig. 8 is a perspective view showing a usage state of the resin molded article for laying rails in the fifth embodiment of the present invention;
Fig. 9 is a view showing an evaluating system; and
Fig. 10 is a view showing an evaluating system.

### DESCRIPTION OF THE PREFERRED EMBODIMENTS

Now, preferred embodiments of the present invention will be described below, making reference to the accompanying drawings.

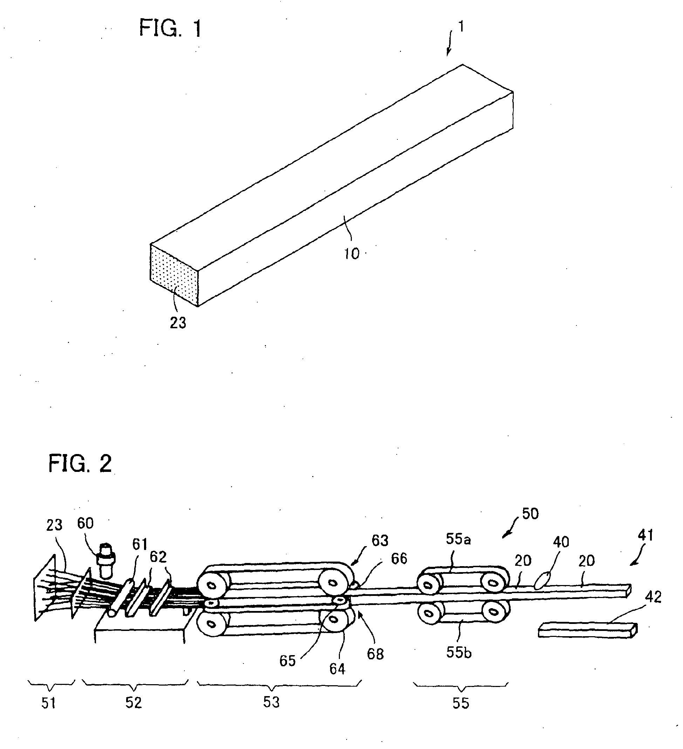

Referring to Fig. 1, a resin molded article for laying rails 1 in the first embodiment of the present invention includes a polyurethane resin part 10 and a fiber part 23. The polyurethane part 10 is obtained through reaction of a polyol and an isocyanate, and the fiber part 23 occurs in a state found in the polyurethane resin part 10.

The resin molded article 1 is of a rectangular column and used as a sleeper.

A polyol used in polyurethane resin specifically uses a polyether polyol. A polyether polyol has a hydroxyl value of 240 mg KOH/g, which is within a range of 80 to 350 mg KOH/g. Further, a polyether polyol has a functionality (the number of functional groups) of 2.5, which is within a range of 2.0 to 3.5.

Further, a polyester polyol or a phenol-modified polyol can be used as a polyol.

Polymeric MDI is employed as an isocyanate used in the polyurethane resin. Polymeric MDI contains polyphenylene polymethylene polyisocyanate, which is referred to as a polynuclear material having more than two benzene rings in one molecule. Polymeric MDI is a combination of polyphenylene polymethylene polyisocyanate and methylene diphenyl isocyanate (hereinafter referred to as MDI). MDI has two benzene rings in one molecule and referred to as a binuclear material.

A polyol in the manufacture of the polyurethane resin in the present invention has a hydroxyl value with a range of 80 to 350 mg KOH/g, which is lower than the value of one normally used in a rigid polyurethane. That makes the intervals between hydroxyls longer and reduces cross-linkages, thereby making the resin softer. Thus, rate of spring of the resin molded article 1 is reduced to be more deformable with the same load, so that vibration is absorbed. Further, vibrational energy (energy of motion) is converted to heat energy (dashpot efficiency), so that vibration is attenuated.

A glass fiber is employed as a fiber of the resin molded article for laying rails 1. The glass fiber is a glass long (continuous) fiber. Further, the fiber may be oriented or may be unoriented.

A polyol and an isocyanate are mixed to be reacted, so as to obtain the polyurethane resin. The resin molded article 1 allows a glass fiber to be present therein in reaction of a polyol and an isocyanate, so as to contain glass fiber after molding.

The polyurethane resin part 10 in the present embodiment has a proportional limit compressive strength of 2.5 MPa, which is within a range of 1.0 to 3.0 MPa and a static spring constant of 45 kN/mm, which is within a range of 5 to 50 kN/mm. Thus, the polyurethane resin part 10 combines a high strength and a vibration damping efficiency.

Herein, these properties are verified by a test with a product molded by only the polyurethane part 10 without containing the fiber part 23, though the description is omitted.

The urethane resin part 10 can be turned into a resin foam by foaming in molding. Further, an addition agent other than a fiber can be added.

Next, a method for producing the resin molded article for laying rails 1 will be described below.

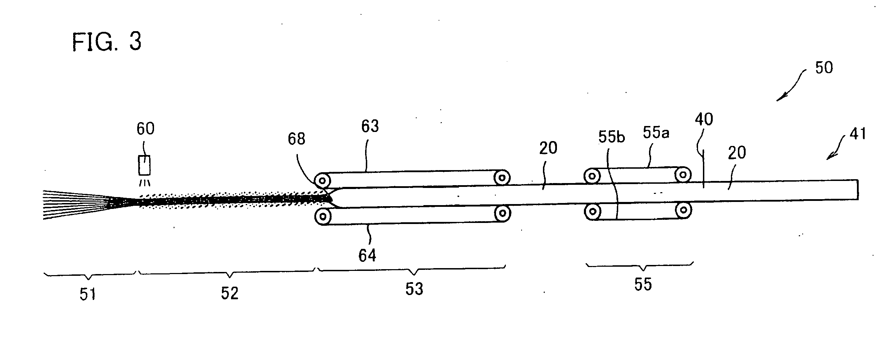

The resin molded article 1 is produced by means of a continuous molding line 50 as shown in Figs. 2 and 3. The continuous molding line 50 includes a fiber supply process 51, a resin impregnation process 52, a molding process 53, and a pickup section 55.

The fiber part 23 is continuously supplied in such a manner as following toward the pickup process 55 from the fiber supply process 51, so as to be picked up by the pickup section 55, whereby the resulting molded article 41 rolls off. The processes proceed in a left-to-right fashion in Figs. 2 and 3 showing the continuous molding line 50.

The fiber supply process 51 continuously supplies fibers to be turned into the fiber part 23, wherein long glass fibers are wound around a bobbin or the like to be let out therefrom and supplied. A plurality of long glass fibers are supplied in a bundle to the fiber supply process 51 and proceed to the resin impregnation process 52.

The resin impregnation process 52 includes spraying nozzle 60, an impregnation roll 61, and pinch plates 62. A liquid resin solution is sprayed toward the fiber part 23 through the spraying nozzle 60, whereupon the fiber part 23 passes through the impregnation roll 61 and are pinched by the pinch plates 62 so as to evenly penetrate the resin solution through its entire portion.

Then, the fiber part 23 is supplied to the molding process 53. The molding process 53 has four endless belts 63, 64, 65, and 66, inside of which a molding passage 68 is formed. The endless belts 63, 64, 65, and 66 each have a flat surface, thereby forming a cross section of the molding passage 68 into a substantially rectangle, corresponding to a cross section of a resin locating part 20. Further, the upper and lower endless belts 63 and 64 is wider than the right and left endless belts 65 and 66 and the cross section of the resin locating part 20 has a vertical width (thickness) longer than a horizontal width.

In molding, the endless belts 63, 64, 65, and 66 are operated. A direction of movement and a moving speed inside the endless belts 63, 64, 65, and 66 in their operating equal to a direction of movement and a moving speed of the fiber part 23. Consequently, it is possible to reduce friction between the belts 63, 64, 65, and 66 and a resin in process of molding.

Further, the molding passage 68 formed by the belts 63, 64, 65, and 66 is heated enough to harden the resin solution. The resin solution impregnated in the fiber part 23 is hardened in the molding passage 68. The resin solution, to which a foaming agent is added, foams in hardening.

The resin hardened by having passed through the molding passage 68 is picked up at the pickup section 55. The pickup section 55 has an upper belt 55a and a lower belt 55b, which operates in such a manner that the resin locating part 20 is sandwiched between the upper and the lower belts 55a and 55b.

Lastly, the resin is cut in a predetermined length by means of a cutter 40, whereupon a process such as surface finish is done to a cut molded article 42 to produce the resin molded article for laying rails 1.

The polyol used in the resin molded article for laying rails 1 in the present embodiment has a hydroxyl value within a range of 80 to 350 mg KOH/g and a functionality within a range of 2.0 to 3.5. Therefore, the polyurethane resin of the resin molded article 1 has a certain level of hardness but rather softer than the conventional one, so as to endure internal pressure of foam formation. That avoids post-expansion and resulting deformation or cracks generated in molded articles, thereby steadily producing the articles. Further, articles molded in this way have high vibration damping capacity.

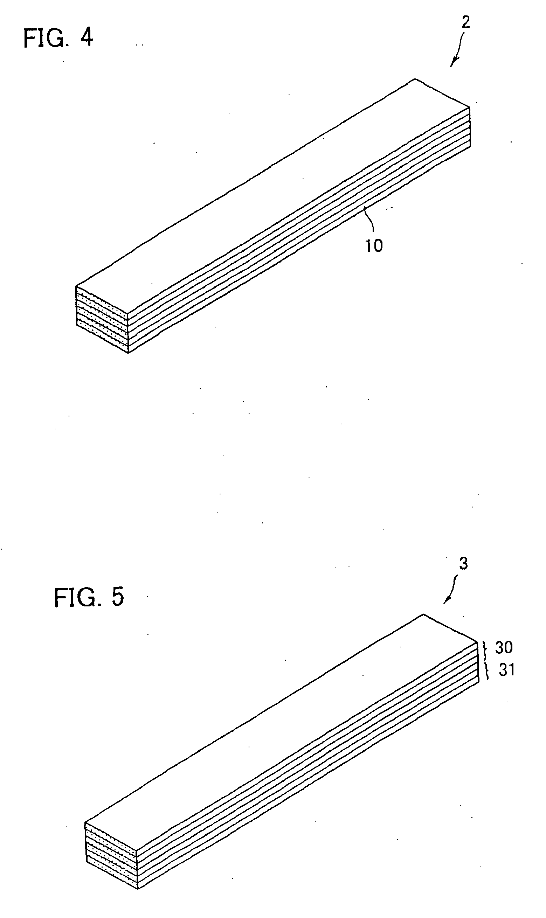

In the embodiment described above, the resin molded article for laying rails 1 is not a laminated body, but as shown in Figs. 4, 5, and 6, may be a laminated body with laminating after molding.

Further, a resin molded article for laying rails 2 in the second embodiment shown in Fig. 4 prepares a plurality of articles produced by the same material as the resin molded article 1 to be produced with the articles laminated.

Still further, a resin molded article for laying rails 3 in the third embodiment shown in Fig. 5 prepares a soft resin part 30 produced by the same material as the resin molded article 1 and a hard resin part 31 harder than the soft resin part 30 with the soft resin part 30 and the hard resin part 31 laminated to make up the resin molded article. The resin molded article 3 is composed of a laminated combination of the soft resin part 30 and the hard resin part 31 put one on top of the other.

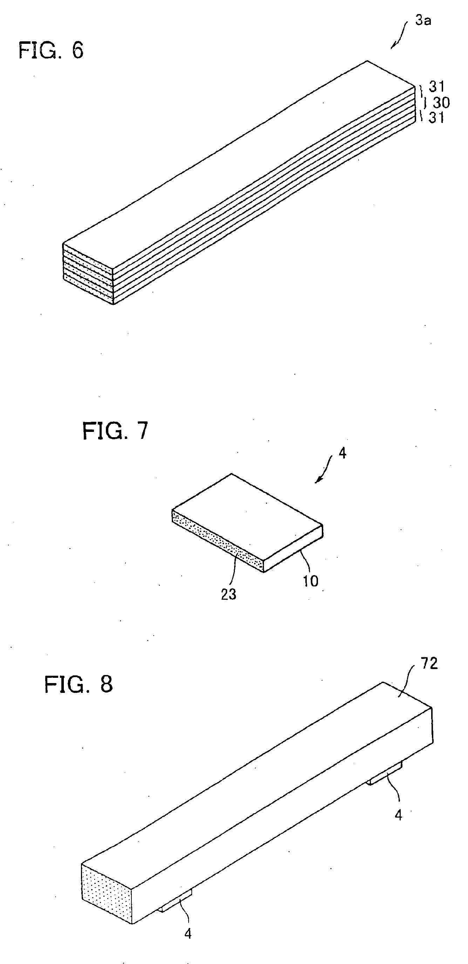

Yet further, it is possible to arrange hard resin parts 31 top and bottom and a soft resin part 30 therebetween as shown in a resin molded article for laying rails 3a in the fourth embodiment shown in Fig. 6, laminating in such a manner that the hard resin parts 31 sandwich the soft resin part 30 from top and bottom.

As the resin molded article for laying rails 1, 2, 3, and 3a shown in Figs. 4, 5, and 6, it is possible to change the number of a laminated body, and in this case, it is possible to laminate by producing a resin molded article having a necessary thickness. Especially, the resin molded article 3 uses the soft and hard resin parts 30 and 31, thereby improving vibration damping efficiency with high strength.

The resin molded article for laying rails 1, 2, 3, and 3a described above uses a glass long fiber in the fiber part 23.

A resin molded article for laying rails 4 in the fifth embodiment of the present invention shown in Fig. 7 has a polyurethane resin part 10 and a fiber part 23 as defined in claim 1.

Further, the resin molded article 4 is produced by means of a molding tool such as a die. Specifically, a material is filled in a molding tool to be molded by compression and heating.

The fiber part 23 uses a crushed body of a resin molded article having a glass fiber. Specifically, a molding article made of fiber-reinforced polyurethane resin is crushed, the crushed powdery body being filled in the above-mentioned molding tool. Thus, the fibers contained in the powdery body made by crushing are turned into the fiber part 23.

A resin to be used after crushing and to which a glass long fiber is added may be selected from any kind thereof, and thus, a waste material after long use or flake generated in producing may be reused. In this case, a material of a resin to be reused is preferably a polyurethane resin. In this way, the resin molded article 4 uses a crushed body of a molding article made of fiber reinforced polyurethane resin, achieving an excellent recycling efficiency.

The above-mentioned resin to which a glass fiber is added may be crushed to a greater or lesser extent, that is, may be crushed so as to form grains having an average grain diameter of 1 mm or more or so as to form powder having an average grain diameter of less than 1 mm. In the case of grains having an average grain diameter of 1 mm or more, it is preferable to have the average grain diameter of less than 5 mm.

A polyurethane resin can be foamed. Foaming reduces the specific gravity. The foaming ratio may be regulated according to usage.

A method for molding the resin molded article 4 in the present embodiment is not especially limited, but as described below, may employ a method of molding individually using a predetermined mold.

Specifically, a polyol and an isocyanate, to which a predetermined amount of a foaming agent or a catalyzer is added as needed, are mixed by a means such as a mixer, so as to prepare a liquid resin solution. Then, the resulting resin solution and a glass fiber are filled in the mold and subsequently foamed and hardened so as to be molded.

In the use of a waste resin to which a glass fiber is added, a crushed resin is filled in a mold in molding, thereby readily molding. The compounding ratio of the resin solution and the crushed resin may be varied depending on a grain diameter of the crushed resin.

Further, in the case of molding using a mold, the resin solution may be molded in a compressed state in hardening. This case stables the shape or the specific gravity of the molded polyurethane resin molded article.

The resin molded article 4 molded as described above can be used as a member for use in a railway track, and specifically, as shown in Fig. 8, as packing attached to a portion where a sleeper 72 is supported.

Herein, "packing" is a member used for adjusting a gap or damping vibration by interposing between rails and sleepers. The packing may be interposed when rails are laid, but may be interposed after laying rails. The interposition of the packing between rails and sleepers fills a gap between the sleepers and the rails generated by attrition or deformation of the sleepers or loosening of joints caused by the use of the rails.

### EXAMPLES

### (Example 1)

The resin molded article for laying rails 3 in the Example 1 was molded in the following way.

Urethane resin solution U1 was prepared using two kinds of polyols. Specifically, 50 parts of polyol P1 (SBU Polyol 610J produced by Sumika Bayer Urethane, Co., Ltd.), 50 parts of polyol P2 (Sumiphen 1600U produced by Sumika Bayer Urethane, Co., Ltd.), 94 parts of isocyanate (Sumidur 44V20 produced by Sumika Bayer Urethane, Co., Ltd.), 1.0 part of a foam stabilizer (SRX 295 produced by Toray Silicon Co., Ltd.), 0.8 part of water as a foaming agent, and 0.2 part of an organotin catalyst (SCAT31A produced by Sankyo Organic Chemicals Co., Ltd.) were compounded. Then, the resulting mixture was treated with homogeneous dispersion using a mixer, so as to prepare the urethane resin solution U1.

The polyol in the urethane resin solution U1 was a mixture composed of two kinds of polyols P1 and P2 and the mixed polyol to be used had a hydroxyl value of 316 mg KOH/g and a functionality of 2.9. NCO functional group was contained in the isocyanate by a ratio of 31 %.

Next, the urethane resin solution U1 was sprayed onto a bundle of glass fiber, and thereafter the glass fiber was impregnated with the urethane resin solution U1 by means of the pinch plates 62. Subsequently, the glass fiber impregnated with the urethane resin solution U1 passed through the molding passage 68 and was foamed and hardened, so as to mold a molded article S1 made from the urethane resin solution U1.

The glass fiber used at this time had a yarn number count of 9200 tex. The foaming ratio of the resin was 2.5 and the specific gravity after molding was 0.74.

The molded article S1 had a bending strength of 134 MPa, a bending Young's modulus of 7950 MPa, a vertical compressive strength of 53 MPa, a shear strength of 10 MPa, and a static spring constant of 48.5 kN/mm.

Separately from the urethane resin solution U1, urethane resin solution Uz was prepared to mold a molded article Sz made from the urethane resin solution Uz. The urethane resin solution Uz was compounded in the same way as the urethane resin solution U1 except that 100 parts of polyol P1 (SBU Polyol 610J produced by Sumika Bayer Urethane, Co., Ltd.) was used as a polyol to be used.

The glass fiber used at this time had a yarn number count of 9200 tex and was contained in the entire molded article Sz by a ratio of 52 % by weight. The foaming ratio of the resin was 2.5 and the specific gravity after molding was 0.74.

The molded article Sz had a bending strength of 142 MPa, a bending Young's modulus of 8100 MPa, a vertical compressive strength of 58 MPa, a shear strength of 10 MPa, and a static spring constant of 80.0 kN/mm.

Then, the molded article S1 and the molded article Sz were laminated in two layers with the molded article S1 at an upper side, thereby foaming the resin molded article 3 in the Example 1.

### (Example 2)

The resin molded article for laying rails 3 in the Example 2 was molded in the following way.

Urethane resin solution U2 was prepared using two kinds of polyols. Specifically, 20 parts of polyol P1 (SBU Polyol 610J produced by Sumika Bayer Urethane, Co., Ltd.), 80 parts of polyol P2 (Sumiphen 1600U produced by Sumika Bayer Urethane, Co., Ltd.), 64 parts of isocyanate (Sumidur 44V20 produced by Sumika Bayer Urethane, Co., Ltd.), 1.0 part of a foam stabilizer (SRX 295 produced by Toray Silicon Co., Ltd.), 0.8 part of water as a foaming agent, and 0.2 part of an organotin catalyst (SCAT31A produced by Sankyo Organic Chemicals Co., Ltd.) were compounded. Then, the resulting mixture was treated with homogeneous dispersion using a mixer, so as to prepare the urethane resin solution U2.

The polyol in the urethane resin solution U2 was a mixture composed of two kinds of polyols P1 and P2 and the mixed polyol had a hydroxyl value of 190 mg KOH/g and a functionality of 2.5. NCO functional group was contained in the isocyanate by a ratio of 31%.

Next, the urethane resin solution U2 was sprayed onto a bundle of glass fiber, and thereafter the glass fiber was impregnated with the urethane resin solution U2 by means of the pinch plates 62. Subsequently, the glass fiber impregnated with the urethane resin solution U2 passed through the molding passage 68 and was foamed and hardened, so as to mold a molded article S2 made from the urethane resin solution U2.

The glass fiber used at this time had a yarn number count of 9200 tex and was contained in the entire molded article S2 by a ratio of 51 % by weight. The foaming ratio of the resin was 2.0 and the specific gravity after molding was 0.9.

The molded article S2 had a bending strength of 67 MPa, a bending Young's modulus of 3400 MPa, a vertical compressive strength of 15 MPa, a shear strength of 4.5 MPa, and a static spring constant of 12 kN/mm.

Then, the molded article S2 and the molded article Sz were laminated in two layers with the molded article S2 at an upper side, thereby foaming the resin molded article 3 in the Example 2.

### (Comparative Example 1)

The resin molded article for laying rails 4 in the Comparative Example 1 was molded in the following way.

The polyol used for this example is not the one used in the urethane resin solutions U1 or U2. Specifically, 100 parts of polyol P3 (SBU Polyol 0475 produced by Sumika Bayer Urethane, Co., Ltd.), 40 parts of isocyanate (Sumidur 44V20 produced by Sumika Bayer Urethane, Co., Ltd.), and 0.1 part of an organotin catalyst (SCAT31A produced by Sankyo Organic Chemicals Co., Ltd.) were compounded. Then, the resulting mixture was treated with homogeneous dispersion using a mixer, so as to prepare urethane resin solution U3.

The polyol in the urethane resin solution U3 had a hydroxyl value of 85 mg KOH/g and a functionality of 2.2. NCO functional group was contained in the isocyanate by a ratio of 31 %.

Crushed polyurethane resin containing a glass fiber and the urethane resin solution U3 were filled into a molding tool and hardened to be molded, thereby molding a molded article S3. The specific gravity of S3 after molding was 0.9.

The crushed resin for use in the molded article S3 formed grains having a diameter within a range of 2 to 5 mm. The crushed resin and the urethane resin solution U3 were compounded at a compounding ratio of 60 : 40. The glass fiber used at this time was contained in the entire molded article S3 by a ratio of 51 % by weight.

The molded article S3 had a bending strength of 67 MPa, a bending Young's modulus of 3400 MPa, a vertical compressive strength of 15 MPa, a shear strength of 4.5 MPa, and a static spring constant of 15 kN/mm.

### (Comparative Example 2)

A molded article in the Comparative Example 2 was molded in the following way.

The molded article Sz was molded using the urethane resin solution Uz so as to be employed as the molded article in the Comparative Example 2.

The glass fiber used at this time had a yarn number count of 9200 tex. The foaming ratio of the resin was 2.5 and the specific gravity after molding was 0.74.

### (Vibration damping capability evaluation)

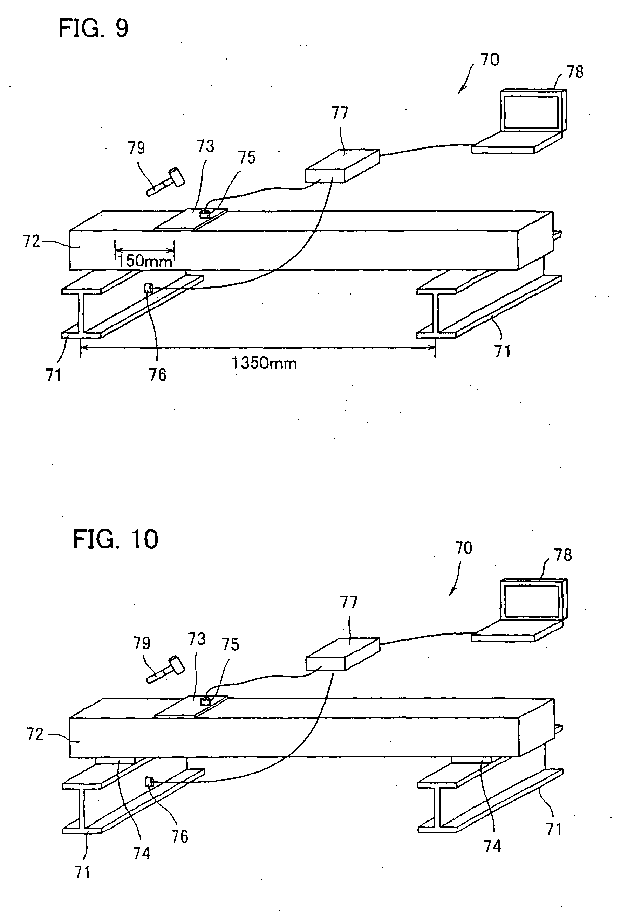

Vibration damping capability was evaluated using an evaluating system 70 shown in Figs. 9 and 10. The evaluating system 70 had two simulated iron girders 71 each made of a wide flange beam, the interval between the two girders 71 being 1350 mm. A sleeper 72 to be evaluated was placed on the two girders 71 for evaluating.

The sleeper 72 to be evaluated (the Examples 1 and 2 and the Comparative Examples 1 and 2) was of a rectangular column with 140 mm x 200 mm x 1500 mm, wherein a thickness of each layer in the Examples 1 and 2 was half of the sleeper thickness. The Comparative Example 1, as shown in Fig. 10, uses the sleeper 72 used in the Comparative Example 2, with packings 74 that are the molded articles in the Comparative Example 1 placed at positions corresponding to the two girders 71. The packings 74 in the Comparative Example 1 each was of a rectangular plate with 30 mm x 200 mm x 500 mm.

A steel sheet 73 was arranged on the sleeper 72 and at 150 mm inside in a longitudinal direction of the sleeper 72. Sensors 75 and 76 were arranged on the steel sheet 73 and the simulated iron girder 71, respectively, so as to detect the respective vibration. Further, the evaluating system 70 had a vibration measuring instrument 77 and a personal computer 78, so that signals from the sensors 75 and 76 were inputted by the vibration measuring instrument 77 into the computer 78, whereby a calculating analysis was performed on the signals inputted from the vibration measuring instrument 77.

Thereafter, as to each sleeper 72 in the Examples 1 and 2 and the Comparative Examples 1 and 2, which was set on the simulated iron girders 71, the steel plate 73 was percussed with an impulse hammer 79 to generate vibration, and whereby a vibration damping capacity of each sleeper 72 was evaluated. Specifically, a vibration attenuation (an overall value of frequency response function) of each sleeper was checked.

As a result, a vibration attenuation was 7.2 dB in the comparative example 2, whereas it was 10.5 dB in the Example 1, 12.4 dB in the Example 2, and 10.2 dB in the Comparative Example 1. The Examples 1 and 2 and Comparative Example 1 had 3.0 to 5.2 dB of difference compared to the Comparative Example 2, thus confirming that they were effective in a vibration damping capacity.

## Claims

1. A resin molded article for laying rails, comprising:
a polyurethane resin part obtainable through reaction of a polyol and an isocyanate; and
a fiber part contained in the polyurethane resin part,
the polyol having a hydroxyl value within a range of 80 to 350 mg KOH/g and a functionality within a range of 2.0 to 3.5,
the polyol and the isocyanate being mixed at a mixing ratio within a range of 1 : 1.1 to 1 : 0.4, wherein the fiber part employs a glass long fiber oriented in a predetermined direction.

2. A resin molded article for laying rails, comprising:
a hard resin part, and
a soft resin part,
wherein the hard and the soft resin parts form a laminated body arranged in laminae, and
wherein the soft resin part consists essentially of the polyurethane resin molded article as defined in claim 1.

3. The resin molded article as defined in claim 1 or 2,
wherein the polyurethane resin part has a proportional limit compressive strength within a range of 1.0 to 3.0 MPa and a static spring constant within a range of 5 to 50 kN/mm.

4. The resin molded article as defined in one of claims 1 to 3 wherein a foaming agent is contained in the polyol and isocyanate mixture.

5. The resin molded article as defined in claim 4 wherein the foaming agent is water.

6. A method for producing the resin molded article for laying rails as defined in one of claims 1 to 5, comprising the steps of:
a step of tying up at least one continuous glass long fiber in a bundle;
a step of impregnating a bundle of glass long fiber with a liquid resin made from a polyol and an isocyanate; and
a step of introducing the glass long fiber impregnated with the liquid resin into a mold so as to harden the liquid resin to be cut in a predetermined length,
so that the resin molded article for laying rails are continuously produced.

## Patentansprüche

1. Harzformkörper zum Verlegen von Gleisen, umfassend
einen Polyurethanharzteil, erhältlich durch Umsetzung eines Polyols und eines Isocyanats; und
einen Faserteil, welcher in dem Polyurethanharzteil enthalten ist,
wobei das Polyol eine Hydroxylzahl innerhalb eines Bereichs von 80 bis 350 mg KOH/g und eine Funktionalität innerhalb eines Bereichs von 2,0 bis 3,5 besitzt,
wobei das Polyol und das Isocyanat in einem Mischungsverhältnis innerhalb eines Bereichs von 1:1,1 bis 1:0,4 gemischt sind, wobei der Faserteil eine in einer vorbestimmten Richtung orientierte Glaslangfaser verwendet.

2. Harzformkörper zum Verlegen von Gleisen, umfassend
einen harten Harzteil und
einen weichen Harzteil,
wobei der harte und der weiche Harzteil einen in Schichten angeordneten laminierten Körper bilden, und
wobei der weiche Harzteil im wesentlichen aus dem Polyurethan-Harzformkörper nach Anspruch 1 besteht.

3. Harzformkörper nach Anspruch 1 oder 2,
wobei der Polyurethanharzteil eine proportionale Grenz-Druckfestigkeit innerhalb eines Bereichs von 1,0 bis 3,0 MPa und eine statische Federkonstante innerhalb eines Bereichs von 5 bis 50 kN/mm besitzt.

4. Harzformkörper nach mindestens einem der Ansprüche 1 bis 3, wobei ein Schaummittel in der Mischung aus Polyol und Isocyanat enthalten ist.

5. Harzformkörper nach Anspruch 4, wobei das Schaummittel Wasser ist.

6. Verfahren zur Herstellung des Harzformkörpers zum Verlegen von Gleisen nach mindestens einem der Ansprüche 1 bis 5, umfassend die Schritte:
einen Schritt des Zusammenbindens mindestens einer kontinuierlichen Glaslangfaser in einem Bündel;
einen Schritt des Imprägnierens eines Bündels aus Glaslangfaser mit einem Flüssigharz, hergestellt aus einem Polyol und einem Isocyanat; und
einen Schritt des Einbringens der mit dem Flüssigharz imprägnierten Glaslangfaser in eine Form, um so das Flüssigharz zu härten und in einer vorbestimmten Länge geschnitten zu werden,
so dass der Harzformkörper zum Verlegen von Gleisen kontinuierlich erzeugt wird.

## Revendications

1. Article moulé en résine conçu pour la pose de voies, qui comprend :
- une partie en résine de polyuréthane accessible par la réaction d'un polyol et d'un isocyanate,
- une partie fibreuse contenue dans la partie en résine de polyuréthane,
le polyol ayant un indice d'hydroxyle de 80 à 350 mg KOH/g et une fonctionnalité de 2,0 à 3,5,
le polyol et l'isocyanate étant mélangés en un rapport de 1/1 à 1/0,4, et la partie fibreuse comportant une fibre longue en verre orientée suivant une direction prédéfinie.

2. Article moulé en résine conçu pour la pose de voies, qui comprend :
- une partie en résine dure,
- et une partie en résine souple,
la partie en résine dure et la partie en résine souple formant un corps stratifié disposé en feuillets,
et la partie en résine souple étant principalement constituée par l'article moulé en résine de polyuréthane selon la revendication 1.

3. Article moulé en résine selon la revendication 1 ou 2, dans lequel la partie en résine de polyuréthane présente une limite proportionnelle de résistance à la compression de 1,0 à 3,0 MPa, et une constante de raideur statique de 5 à 50 kN/mm.

4. Article moulé en résine selon l'une des revendications 1 à 3, dans lequel le mélange de polyol et d'isocyanate contient un agent d'expansion.

5. Article moulé en résine selon la revendication 4, dans lequel l'agent d'expansion est de l'eau.

6. Procédé de production d'un article moulé en résine conçu pour la pose de voies selon l'une des revendications 1 à 5, qui comprend les étapes consistant à :
- disposer en écheveau au moins une fibre longue continue en verre pour en faire un faisceau,
- imprégner le faisceau de fibre(s) longue(s) en verre avec une résine liquide formée à partir d'un polyol et d'un isocyanate,
- et introduire dans un moule la fibre longue en verre ainsi imprégnée par la résine liquide pour faire durcir la résine liquide et pouvoir la couper à une longueur prédéfinie,
de manière à assurer la production continue d'articles moulés en résine conçus pour la pose de voies.
